# EUROPEAN PATENT SPECIFICATION

(11) **EP 2 545 764 B1**
(45) Date of publication and mention of the grant of the patent: **23.04.2014**
(21) Application number: 11005707.2
(22) Date of filing: 13.07.2011
(51) Int. Cl.: A01F 15/08

(54) **Baler and method for operating a baler**
Ballenpresse und Verfahren zum Betreiben einer Ballenpresse
Ramasseuse-presse et procédé de fonctionnement d'une ramasseuse-presse

(43) Date of publication of application: 16.01.2013
(73) Proprietor: Usines CLAAS France S.A., 57140 St. Remy / Woippy (FR)
(72) Inventor: Scharf, Thorsten, 66693 Mettlach (DE); Hesselmann, Ulrich, 66706 Perl (DE); Arnould, Cyrille, 57645 Montoy-Flanville (FR); Waechter, Julien, 57640 Failly (FR)
(74) Representative: Heuer, Wilhelm

(56) References cited:
- EP-A1- 0 857 414
- WO-A1-2011/032980
- FR-A- 1 340 188

## Description

The invention relates to a method for operating a baler, particularly a square baler, with a pressing chamber serving for the pressing of a straw-like crop, in which the crop is compacted by means of an adjustable pressing pressure and bound through holding material.

Furthermore, the invention relates to a baler, particularly a round baler or square baler, having a pressing compartment for compacting a straw-like crop by means of an adjustable pressing pressure and for binding the compacted crop.

Both round balers as well as square balers are available on the market, with which the pressing pressure in the pressing chamber is adjustable and thus also the pressed density of the crop. Despite the adjustable pressing pressure it is quite possible with the balers present on the market that the pressing pressure is not matched to the material properties, particularly to the tensile strength of the binding twine. Thus it is possible for example that the pressing pressure is set too high and the tensile strength of the binding twine does not withstand the pressed crop. In that case the twine snaps. It is likewise possible as well that the pressing pressure is set too low and because of this the capability of the binding twine is not exploited. With the high-performance balers present on the market it is extremely difficult and time-consuming for their user to match the performance of the baler to the capability of the binding twine. With the balers present on the market today this can only be accomplished through testing and trial during harvesting operation.

The invention is based on the object of improving the prior art with simple measures. EP-A-0857414 discloses the features of the preamble of claims 1 and 11. First, this is achieved through the features of claim 1, according to which a method for operating a baler, particularly a high-pressure baler, such as a square baler or the like with a pressing chamber for pressing a straw-like crop is provided, in which the crop is compacted by means of an adjustable pressing pressure and bound through holding material, wherein the pressing pressure is limited to a maximum value and controlled through a control circuit whose reference variable is a load variable of the holding material.

Furthermore, above object is solved through the features of claim 11, according to which a baler, particularly a round baler or square baler, with a pressing chamber for compacting a straw-like crop by means of an adjustable pressing pressure and for binding the compacted crop using a holding material, comprises an operating unit for setting a load characteristic of the holding material, a control circuit for receiving said load characteristic as a reference variable and a detected load of the holding material as a feedback variable and outputting an actuating variable representative of the pressing pressure based on said reference and feedback variables, and an evaluation unit for receiving said actuating variable and limiting it to a predetermined maximum value, which reflects a baler-specific maximum load.

Through the invention, the pressing pressure on the one hand is optimised by means of the control circuit to the maximum load capacity, particularly the tensile strength, of the holding material, particularly of the binding twine, so that an overloading of the holding material is avoided, and snapping can be prevented. At the same time it is also securely brought about through the invention that a degree of utilisation for the high-performance baler, particularly of a square baler or round baler is achieved, which ensures an optimised compacting of the straw-like crop. Despite the optimised utilisation of the holding material, particularly of the binding twine in conjunction with an optimised pressed density of the crop, it is additionally achieved through the invention that the baler, particularly its mechanical components, are not damaged during a pressing operation, when for example an extremely high-strength holding material for a baler type is erroneously used whose limit load, particularly its tensile strength allows pressing pressures which are above the limit load of the baler, particularly of mechanical components of the baler.

Preferably the pressing pressure in a first predetermined pressing phase is reduced to a value that is smaller than the maximum value.

Through such a reduction of the pressing pressure by an adjustable safety factor a damaging of the holding material, particularly of the binding twine, and the baler is particularly securely avoided. At the same time, starting out from this pressing pressure as reference variable for the control circuit, a pressing pressure that is matched to the respective holding means, particularly of the binding twine, in an optimised manner can be particularly quickly and reliably set by the control circuit.

According to a preferred embodiment of the invention it is provided that the maximum value is a characteristic of the baler. This characteristic can for example be the load limit of sensitive mechanical components of the high-performance baler. Even the use of a holding means, particularly of a highly tear-resistant binding twine, the load limit of which would allow for a pressing pressure that might damage the baler, is harmless for such a baler since the actual pressing pressure can never exceed the load limit of the baler.

Particularly preferably the maximum value of the baler and/or the load characteristic of the holding material is stored in an operating terminal, particularly an operating terminal with a display, and at least the load characteristic of the holding material can be accessed by the user of the baler and adjusted to match specified characteristics of the holding material the baler is currently using.

The holding material can be specifically subjected to a load in a particular manner especially when it is embodied as binding twine, if according to a further preferred embodiment of the subject of the invention it is provided that the load characteristic of the holding material is its maximum tensile strength.

Particularly preferably, a plurality of different holding materials with their specific characteristic data, particularly their tensile strengths, are stored in the operating terminal from which in each case a holding material can be selected and preferably saved.

According to a further preferred embodiment of the subject of the invention it is provided that the holding material is a binding twine.

Particularly preferably at least one force which occurs on the holding material is detected through at least one sensor and serves as controlling quantity for the control circuit.

Through such a measure the degree of utilisation of the holding material, particularly of the binding twine can be at least reliably determined, and thus an optimised utilisation of the holding material is achieved.

According to a next preferred embodiment of the invention it is provided that the force that occurs on the binding twine is detected on a knotting device of the baler, particularly of a square baler, particularly on its knotter beak or on its knotter frame, through the at least one sensor.

Through such a determination of the binding twine load the latter is determined at a location of the baler that is particularly critical for the loadability of the binding twine. If this critical loadability influences the control circuit as controlling quantity, a snapping of the binding twine is securely avoided in a particularly simple manner.

Particularly preferably, the control circuit comprises a PI controller or a PID controller.

According to a preferred embodiment of the invention it is provided that the control circuit as controlling section comprises a time-delay element of the first order or an oscillation-free time-delay element of the second order.

With a baler according to the invention, particularly a round baler or square baler, comprising a pressing chamber for compacting a straw-like crop by means of an adjustable pressing pressure and for binding the compacted crop using a holding material, an operating unit for setting a load characteristic of the holding material, a control circuit for receiving said load characteristic as a reference variable and a detected load of the holding material as a feedback variable and outputting an actuating variable representative of the pressing pressure based on said reference and feedback variables, and an evaluation unit for receiving said actuating variable and limiting it to a predetermined maximum value which reflects a maximum load of the baler, a secure protection from damage is combined with efficient utilisation of the holding material.

Preferably, the holding material is embodied as binding twine.

Particularly preferably, the maximum load of the baler is the deformation resistance of one or a plurality of mechanical components of the baler.

According to an advantageous embodiment of the invention at least one force sensor is provided, which is assigned to a knotter device, preferentially its knotter beak or its knotter frame, in order to detect the force that occurs on the binding twine.

Particularly preferably a sensor for detecting the pressing pressure is provided, which is preferably arranged on the pressing piston of the square baler.

In the following description the invention is explained by means of an exemplary embodiment shown in a simplified manner in the enclosed drawing. It shows:
- Fig. 1: purely schematically by means of a basic block diagram representation a first embodiment of the method according to the invention,
- Fig. 2: likewise in a simplified block diagram representation a second embodiment of the method according to the invention and
- Fig. 3: purely schematically a square baler according to the invention in section representation from the side.

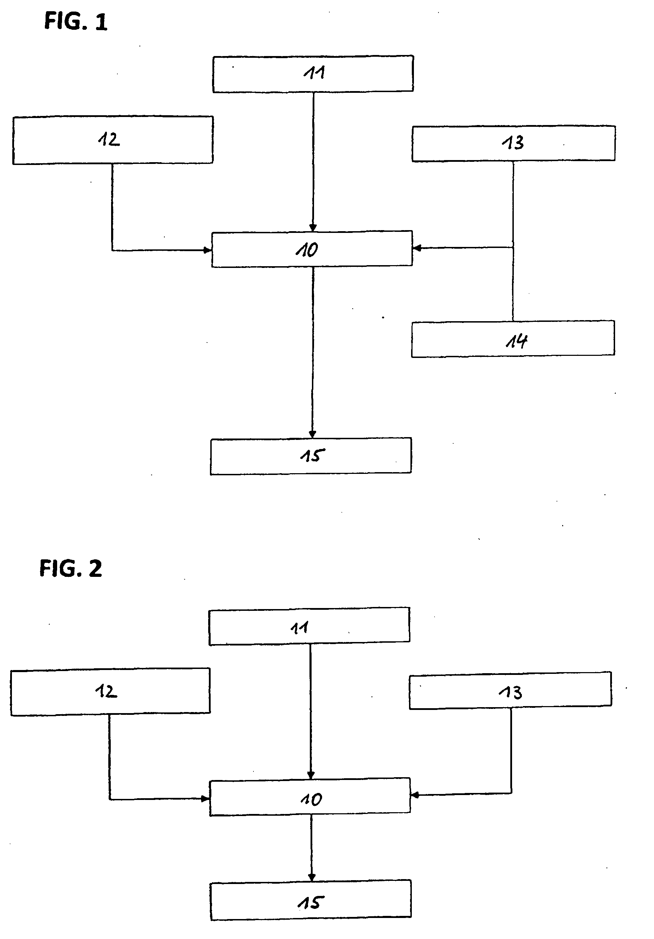

According to Fig. 1 a module 10 is shown, which comprises a control circuit that is not described in more detail, which is preferably formed out of electronic components and which in the present case comprises a PID controller that is likewise not shown and an oscillation-free time-delay element of the second order serving as controlling section. In signal contact with the module 10 is an operating terminal 11 of a high-performance baler which in this context is not described in more detail, particularly of a square baler. The operating terminal 11 can be installed in a traction vehicle of the baler which is not shown and likewise not described in more detail.

Likewise in signal contact with the module 10 is a pressing pressure sensor 12, which preferably senses the piston pressure of a pressing piston of the square baler and directs it to the module 10 for evaluating its signals. The module also evaluates the sensor signals of a binding twine load sensor 13, which is preferably embodied as force sensor.

The signals of a straw measuring wheel 14 are also transmitted to the module 10, which in addition to the control circuit preferably also comprises an evaluation unit and which via its control circuit controls the throughput of a valve 15 for the pressing pressure of the pressing piston.

At the start of the pressing operation, after the tensile strength of the binding twine has been entered in the operating terminal 11 by an operating person, the operating terminal 11 or the module 10 predetermines a so-called initial pressing pressure which is always selected so that neither tearing of the binding twine nor damaging of mechanical press components are accompanied by this pressing operation. It may be assumed that the resilient force the bale can apply to the twine is not higher than the pressure to which the bale was previously subjected by the piston, and that if e.g. n=2 loops of twine are formed around the bale, each thread of the twine is subject to approximately 1/2n times the resilient force. Accordingly, the initial pressing pressure may be selected equal to the maximum pressing force allowed for the baler or 2n times the tensile strength of the twine, whatever is smaller, multiplied by a predetermined safety factor smaller than 1. Starting from this initial pressing pressure the module 10 controls, by means of the pressing pressure sensor signals and based on the signals of the binding twine force sensor 13, a valve 15 to a pressing pressure for the pressing piston of the square baler, based on a predetermined number of press meters monitored by the straw measuring wheel sensor 14, which ensures an optimised utilisation of the baler and of the binding twine, without the binding twine and/or the baler being damaged, by gradually increasing the pressing pressure until either the pressure of the piston has reached the maximum rated value of the baler or the force detected by binding twine force sensor 13 is just short of the specified tensile strength.

According to Fig. 2 a block diagram for a second embodiment of a pressing pressure regulation for a high-pressure baler is shown, which differs from the embodiment described regarding Fig. 1 only in that with this embodiment the straw wheel as sensor is omitted, so that same reference characters are used for same components of this embodiment.

For the function of the present pressing pressure regulation the input signal of the straw wheel is omitted, as a result of which the initial pressing pressure that manifests itself based on the load input, particularly the input of the maximum tensile strength in the operating terminal 11 on the module 10, is not controlled according to a predetermined number of press metres but immediately after the start of the pressing operation the pressing pressure is controlled through the control circuit provided in the module 10 for the pressing twine and the square baler with respect to their optimised utilisation.

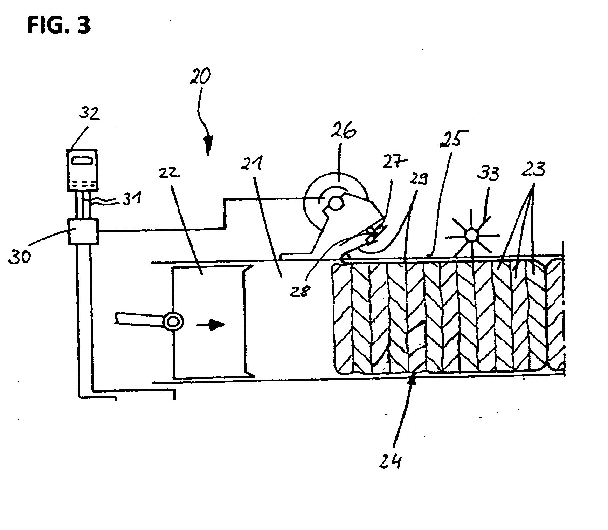

Fig. 3 shows a detail of a large square baler 20 with a pressing channel 21 in which, by means of a pressing piston 22 linearly moved therein, a straw-like crop 23 conveyed via a feeding channel, not shown, is compacted into a square bale 24. After a certain number of charges of the straw-like crop 23 has been fed into pressing channel 21, a knotter operation is triggered on a knotter device 26 arranged on an upper wall 25 of the pressing channel 21. For this purpose, the knotter device 26 is provided with a knotter beak 27 shown in the present case in a clearly simplified manner, on which a force sensor 28 is provided, which serves for detecting forces which occur on a binding twine 29 held by the knotter beak 27. The forces on the binding twine 29 detected by the force sensor 28 are passed on to a processing electronic device 30 for their further processing, which device in the present case is connected to an operating terminal 32 via lines 31 for the exchange of data. Furthermore, the processing electronic device 30 is connected via a signal line, is not shown, to a sensor for sensing the revolutions of a straw measuring wheel 33, which sensor is not shown in more detail.

At the start of the pressing operation an operating person sets the maximum load limit, particularly the maximum permissible tensile strength of the binding twine selected for an intended pressing operation, on the operating terminal 32, following which for example the processing electronic device 30 outputs said initial pressing pressure as preliminary reference variable to a control circuit which is not shown in more detail and preferentially integrated in the module 10 for controlling the pressing pressure. Once a predetermined number of press metres has been signalled to the processing electronic device 30 by the straw measuring wheel 33 the processing electronic device 30 releases the preset initial pressing pressure and controls the pressing pressure based on the force sensor signals of the binding twine force sensor and the sensor signals of the pressing piston force sensor for the further pressing operations, which pressing pressure, based on the force sensor signals of the force sensors, is then controlled to a quantity which ensures that neither the binding twine nor the square baler, particularly sensitive mechanical components of this baler, are damaged upon a repeated pressing of a straw-like crop.

### List of reference numbers

- 10 =: Module
- 11 =: Operating terminal
- 12 =: Pressing pressure sensor
- 13 =: Binding twine load sensor
- 14 =: Straw measuring wheel sensor
- 15 =: Valve

- 20 =: Square baler
- 21 =: Pressing channel
- 22 =: Pressing piston
- 23 =: Crop
- 24 =: Bale
- 25 =: Upper wall
- 26 =: Knotter device
- 27 =: Knotter beak
- 28 =: Force sensor
- 29 =: Binding twine
- 30 =: Processing electronic device
- 31 =: Lines
- 32 =: Operating terminal
- 33 =: Straw measuring wheel

## Claims

1. A method for operating a baler (20), particularly a square baler, with a pressing chamber (21) for pressing a straw-like crop (23) in which the crop (23) is compacted by means of an adjustable pressing pressure and bound through holding material (29), **characterized in that** the pressing pressure is limited to a maximum value and controlled through a control circuit the reference variable of which is a load characteristic of the holding material (29).

2. The method according to claim 1, **characterized in that** the pressing pressure in a first predetermined pressing phase is reduced to a value that is smaller than the maximum value.

3. The method according to claim 1 or 2, **characterized in that** the maximum value is a characteristic of the baler.

4. The method according to any one of the claims 1 or 3, **characterized in that** the characteristic of the baler and/or the load characteristic of the holding material (29) is stored in an operating terminal (32).

5. The method according to any one of the preceding claims, **characterized in that** the load characteristic of the holding material (29) is the maximum tensile strength of the holding material (29).

6. The method according to any one of the preceding claims, **characterized in that** a plurality of holding materials (29) and their load characteristics, preferably their tensile strengths, are stored in the operating terminal (32), and a holding material (29) is selected among said stored holding materials.

7. The method according to any one of the preceding claims, **characterized in that** at least one force that occurs on the holding material (29) is detected through at least one sensor (28) and serves as controlling quantity for the control circuit.

8. The method according to claim 7, **characterized in that** the force that occurs on the holding material (29) is detected on a knotter device (26) of the baler (20), particularly of a square baler, preferably on its knotter beak (27) or knotter frame, through the at least one sensor (28).

9. The method according to any one of the claims 1 to 8, **characterized in that** the control circuit comprises a PI controller or a PID controller

10. The method according to any one of the claims 1 to 9, **characterized in that** the control circuit comprises a time-delay element of the first order or an oscillation-free time-delay element of the second order.

11. A baler, particularly round baler or square baler, with a pressing chamber (21) for compacting a straw-like crop (23) by means of an adjustable pressing pressure and for binding the compacted crop (23) using a holding material (29), **characterized in that** it comprises an operating terminal (32) for setting a load characteristic of the holding material (29), a control circuit for receiving said load characteristic as a reference variable and a detected load of the holding material (29) as a feedback variable and outputting an actuating variable representative of the pressing pressure based on said reference and feedback variables, and an evaluation unit (30) for receiving said actuating variable and limiting it to a predetermined maximum value which reflects a maximum load of the baler (29).

12. The baler according to claim 11, **characterized in that** the holding material is a binding twine (29).

13. The baler according to claim 11 or 12, **characterized in that** the maximum load of the baler (20) is the deformation resistance of one or a plurality of mechanical components of the baler (20).

14. The baler according to any of the claims 11 to 13, **characterized in that** at least one first force sensor (28) is provided, which is assigned to a knotter device (26) of the baler (20), preferably its knotter beak (27) or its knotter frame, and detects the force that occurs on the binding twine (29).

15. The baler according to any of the claims 11 to 14, **characterized in that** at least one second force sensor is provided, which detects the pressing force, particularly the piston pressure of a pressing piston (22).

## Patentansprüche

1. Verfahren zum Betreiben einer Ballenpresse (20), insbesondere einer Rechteckballenpresse, mit einer Presskammer (21) zum Pressen von halmartigem Erntegut (23), in der das Erntegut (23) mit einem einstellbaren Pressdruck verdichtet und mit Haltematerial (29) gebunden wird, **dadurch gekennzeichnet, dass** der Pressdruck auf einen Maximalwert begrenzt und durch einen Regelkreis geregelt wird, dessen Führungsgröße eine Lastgröße des Haltematerials (29) ist.

2. Verfahren nach Anspruch 1, **dadurch gekennzeichnet, dass** in einer ersten vorgegebenen Pressphase der Pressdruck auf einen Wert begrenzt wird, der kleiner ist als der Maximalwert.

3. Verfahren nach Anspruch 1 oder 2, **dadurch gekennzeichnet, dass** der Maximalwert ein Merkmal der Ballenpresse ist.

4. Verfahren nach einem der Ansprüche 1 oder 3, **dadurch gekennzeichnet, dass** das Merkmal der Ballenpresse und/oder die Lastgröße des Haltematerials (29) in einem Bedienterminal (32) gespeichert wird.

5. Verfahren nach einem der vorhergehenden Ansprüche, **dadurch gekennzeichnet, dass** die Lastgröße des Haltematerials (29) die maximale Zugfestigkeit des Haltematerials (29) ist.

6. Verfahren nach einem der vorhergehenden Ansprüche, **dadurch gekennzeichnet, dass** eine Mehrzahl von Haltematerialien (29) und ihre Lastgrößen, vorzugsweise ihre Zugfestigkeiten, in dem Bedienterminal (32) gespeichert werden und dass ein Haltematerial (29) unter den gespeicherten Haltematerialien ausgewählt wird.

7. Verfahren nach einem der vorhergehenden Ansprüche, **dadurch gekennzeichnet, dass** wenigstens eine Kraft, die an dem Haltematerial (29) auftritt, durch wenigstens einen Sensor (28) erfasst wird und als Steuergröße für die Steuerschaltung dient.

8. Verfahren nach Anspruch 7, **dadurch gekennzeichnet, dass** die Kraft, die an dem Haltematerial (29) auftritt, an einer Knotervorrichtung (26) der Ballenpresse (20), insbesondere einer Rechteckballenpresse, vorzugsweise an ihrem Kno.terschnabel (27) oder Knoterrahmen durch den wenigstens ein Sensor (28) erfasst wird.

9. Verfahren nach einem der Ansprüche 1 bis 8, **dadurch gekennzeichnet, dass** die Steuerschaltung eine PI-Steuerung oder eine PID-Steuerung umfasst.

10. Verfahren nach einem der Ansprüche 1 bis 9, **dadurch gekennzeichnet, dass** die Steuerschaltung als Zeitverzögerungselement erster Ordnung oder ein oszillationsfreies Zeitverzögerungselement zweiter Ordnung umfasst.

11. Ballenpresse, insbesondere Rundballenpresse oder Quaderballenpresse, mit einer Presskammer (21) zum Verdichten von halmartigem Erntegut (23) mit einem einstellbaren Pressdruck und zum Binden des verdichteten Ernteguts (23) unter Verwendung eines Haltematerials (29), **dadurch gekennzeichnet, dass** sie ein Bedienterminal (32) zum Einstellen einer Lastgröße des Haltematerials (29), eine Steuerschaltung zum Empfangen der Lastgröße als Referenzvariable und einer erfassten Last des Haltematerials (29) als Rückkopplungsvariable und zum Ausgeben einer für den Pressdruck repräsentativen Betätigungsvariable basierend auf den Referenz- und Rückkopplungsvariablen und eine Auswertungseinheit (30) zum Erfassen der Betätigungsvariable und Begrenzen derselben auf einen vorgegebenen Maximalwert, der eine maximale Last der Ballenpresse (20) widerspiegelt, umfasst.

12. Ballenpresse nach Anspruch 11, **dadurch gekennzeichnet; dass** das Haltematerial ein Bindegarn (29) ist.

13. Ballenpresse nach Anspruch 11 oder 12, **dadurch gekennzeichnet, dass** die maximale Last der Ballenpresse (20) der Verformungswiderstand einer oder mehrerer mechanischer Komponenten der Ballenpresse (20) ist.

14. Ballenpresse nach einem der Ansprüche 11 bis 13, **dadurch gekennzeichnet, dass** wenigstens ein erster Kraftsensor (28) vorgesehen ist, der einer Knotervorrichtung (26) der Ballenpresse (20), vorzugsweise deren Knoterschnabel (27) oder ihrem Knoterrahmen, zugeordnet ist und die Kraft, erfasst, die an dem Bindegarn (29) auftritt.

15. Ballenpresse nach einem der Ansprüche 11 bis 14, **dadurch gekennzeichnet, dass** wenigstens ein zweiter Kraftsensor vorgesehen ist, der die Presskraft, insbesondere die Kolbenkraft eines Presskolbens (22), erfasst

## Revendications

1. Procédé d'utilisation d'une presse (20), en particulier d'une presse à balles carrées, comportant une chambre de pressage (21) pour le pressage d'une récolte de type paille (23), dans laquelle la récolte (23) est compactée au moyen d'une pression de pressage réglable et liée au moyen d'un matériau de retenue (29), **caractérisé en ce que** la pression de pressage est limitée à une valeur maximum et contrôlée au moyen d'un circuit de commande, dont la variable de référence est une caractéristique de charge du matériau de retenue (29).

2. Procédé selon la revendication 1, **caractérisé en ce que** la pression de pressage dans une première phase de pressage prédéterminée est réduite jusqu'à une valeur qui est inférieure à la valeur maximum.

3. Procédé selon la revendication 1 ou 2, **caractérisé en ce que** la valeur maximum est une caractéristique de la presse.

4. Procédé selon l'une quelconque des revendications 1 ou 3, **caractérisé en ce que** la caractéristique de la presse et/ou la caractéristique de charge du matériau de retenue (29) est mémorisée dans un terminal d'exploitation (32).

5. Procédé selon l'une quelconque des revendications précédentes, **caractérisé en ce que** la caractéristique de charge du matériau de retenue (29) est la résistance maximum à la traction du matériau de retenue (29).

6. Procédé selon l'une quelconque des revendications précédentes, **caractérisé en ce qu'**une pluralité de matériaux de retenue (29) et leurs caractéristiques de charge, préférablement leurs résistances à la traction,
sont mémorisées dans le terminal d'exploitation (32), et un matériau de retenue (29) est sélectionné parmi lesdits matériaux de retenue mémorisés.

7. Procédé selon l'une quelconque des revendications précédentes, **caractérisé en ce qu'**au moins une force qui apparaît sur le matériau de retenue (29) est détectée au moyen d'au moins un capteur (28) et sert de quantité de contrôle pour le circuit de commande.

8. Procédé selon la revendication 7, **caractérisé en ce que** la force qui apparaît sur le matériau de retenue (29) est détectée sur un dispositif lieur (26) de la presse (20), en particulier d'une presse à balles carrées, préférablement sur son bec de liage (27) ou sur le cadre du lieur, au moyen dudit au moins un capteur (28).

9. Procédé selon l'une quelconque des revendications 1 à 8, **caractérisé en ce que** le circuit de commande comprend un contrôleur PI ou un contrôleur PID.

10. Procédé selon l'une quelconque des revendications 1 à 9, **caractérisé en ce que** le circuit de commande comprend un élément de temporisation du premier ordre ou un élément de temporisation sans oscillation du deuxième ordre.

11. Presse, en particulier une presse à balles rondes ou une presse à balles carrées, comportant une chambre de pressage (21) pour compacter une récolte de type paille (23) au moyen d'une pression de pressage réglable et pour lier la récolte compactée (23) en utilisant un matériau de retenue (29), **caractérisée en ce qu'**elle comprend un terminal d'exploitation (32) pour définir une
caractéristique de charge du matériau de retenue (29), un circuit de commande pour recevoir ladite caractéristique de charge comme variable de référence et une charge détectée du matériau de retenue (29) comme variable de rétroaction et sortir une variable d'actionnement représentative de la pression de pressage à partir desdites variables de référence et de rétroaction, et une unité d'évaluation (30) pour recevoir ladite variable d'actionnement et la limiter à une valeur maximum prédéterminée qui reflète une charge maximum de la presse (29).

12. Presse selon la revendication 11, **caractérisée en ce que** le matériau de retenue est une ficelle agricole (29) .

13. Presse selon la revendication 11 ou 12, **caractérisée en ce que** la charge maximum de la presse (20) est la résistance à la déformation d'un ou plusieurs composants mécaniques de la presse (20).

14. Presse selon l'une quelconque des revendications 11 à 13, **caractérisée en ce qu'**au moins un premier capteur de force (28) est présent, lequel est affecté à un dispositif lieur (26) de la presse (20), préférablement son bec de liage (27) ou le cadre de son lieur, et détecte la force qui apparaît sur la ficelle agricole (29).

15. Presse selon l'une quelconque des revendications 11 à 14, **caractérisée en ce qu'**au moins un deuxième capteur de force est présent, lequel détecte la force de pressage, en particulier la pression de piston d'un piston de pressage (22).
